# EUROPÄISCHE PATENTSCHRIFT

(11) **EP 1 193 135 B1**
(45) Veröffentlichungstag und Bekanntmachung des Hinweises auf die Patenterteilung: **25.02.2004**
(21) Anmeldenummer: 01123575.1
(22) Anmeldetag: 01.10.2001
(51) Int. Cl.: B60R 19/02

(54) **Stossfängeranordnung**
Bumper assembly
Arrangement de pare-chocs

(30) Priorität: 02.10.2000 DE 10048902
(43) Veröffentlichungstag der Anmeldung: 03.04.2002
(73) Patentinhaber: Benteler Automobiltechnik GmbH, 33102 Paderborn (DE)
(72) Erfinder: Härtel, Wulf, 33184 Altenbeken (DE); Korinth, Hendrik, 33106 Paderborn (DE); Böhmer, Werner, 34439 Willebadessen (DE)
(74) Vertreter: Ksoll, Peter, Dr.-Ing.

(56) Entgegenhaltungen:
- EP-A- 1 036 715
- DE-A- 19 861 026
- DE-C- 4 413 641
- US-A- 3 809 420
- US-A- 4 542 925
- US-A- 6 007 123

## Beschreibung

Die Erfindung betrifft eine Stoßfängeranordnung für den durch eine Verschalung verkleideten Front- oder Heckbereich der Karosserie eines Personenkraftwagens gemäß den Merkmalen im Oberbegriff von Anspruch 1.

Derartige Stoßfängeranordnungen tragen dazu bei, dass die Fahrzeugstruktur bei einem Anprall mit geringer Geschwindigkeit keine Beschädigung davonträgt. Meist sind zwischen den Querträger und die Längsträger noch Distanzkonsolen, sogenannte Crashboxen, eingegliedert. Die Crashboxen sollen zusätzlich zum Querträger die aus einem Anprall resultierende Energie absorbieren, indem diese in Verformungsarbeit umgewandelt wird. Neben dem Schutz der Fahrzeugstruktur dient die Stoßfängeranordnung dem Schutz von Fußgängern bei einem Zusammenstoß mit dem Kraftfahrzeug, indem die Belastung insbesondere auf die unteren Extremitäten eines Fußgängers vermindert wird.

Eine bekannte Stoßfängeranordnung zeigt die DE 44 13 641 C1. Diese sieht einen als Energieabsorber ausgebildeten Querträger vor. Auf der Vorderseite des Querträgers sind sich an diesem abstützende Pralldämpfer angeordnet aus einem Energie absorbierenden Material, das bevorzugt aus Kunststoffschaum oder einer Wabenstruktur aus Kunststoff besteht.

Aus der US-A-5,154,462 geht eine Stoßfängeranordnung hervor mit einem Querträger aus einem mit den Längsträgern fest verbundenen C-förmigen Rückenteil aus einem ersten metallischen Werkstoff, z.B. Stahl und aus einem dieses abdeckenden C-förmigen Schließteil aus einem zweiten leichteren Material z.B. Aluminium. Beide Teile sind so aneinandergesetzt, dass sie ein kastenförmiges Hohlprofil bilden, welches durch einen Kunststoffschaum ausgefüllt wird.

Die EP 1 036 715 A2 offenbart eine Stoßfängeranordnung für einen durch eine Verschalung verkleideten Frontbereich der Karosserie eines Personenkraftwagens. Ein Querträger ist vorgesehen, der endseitig über Distanzkonsolen und Anschlagplatten mit den Längsträgern der Karosserie verbunden ist. Unterhalb des Querträgers ist zusätzlich ein Querholm vorgesehen. Der Querträger und/oder die Distanzkonsolen sind zumindest bereichsweise in wenigstens zwei in Fahrzeuglängsrichtung untereinander liegende Deformationsbereiche mit unterschiedlichen Kraftniveaus gegliedert. Der Querträger kann als Hohlprofil in Form eines im Querschnitt U-förmigen Schalenkörpers ausgebildet sein. Mit der offenen Seite des U-Profils ist der Querträger zu den Distanzkonsolen hin gerichtet.

Die US-A-4,542,925 betrifft einen Stoßfänger für einen Kraftwagen, bestehend aus einem sich an fahrzeugfesten Teilen abstützenden biegesteifen Träger mit etwa in Fahrzeuglängsrichtung abgebogenen seitlichen Endbereichen, dem eine wellenförmige, sich über die Länge des Stoßfängers einschließlich seiner abgebogenen Endbereiche erstreckende Blattfeder vorgelagert ist. Die Blattfeder und der Träger sind einstückig aus synthetischem Harz bzw. Kunststoff gebildet.

Im Umfang der DE 198 06 541 A1 ist eine Stoßfängeranordnung bekannt mit einem Querträger, der als Hohlteil ausgebildet ist, in welchem Kunststoffschaumschichten unterschiedlicher Dichte vorgesehen sind. Hierdurch wird ein Nachgiebigkeitsverhalten auf zwei Kraftniveaus realisiert. Das Hohlprofil besteht aus zwei U-förmig ineinander geschachtelten Schalenkörpern, die mittels Bolzen und Schlitzverbindungen aneinandergefügt sind. Die Anordnung verfolgt das Ziel, einen Anprall auf verschiedenen Kraftniveaus zunächst abzubremsen und zu verlangsamen, bevor es zur bleibenden plastischen Verformung der Anordnung kommt, in der Energie in Verformungsarbeit umgewandelt wird.

Das äußere Schalenteil ist auf dem inneren Schalenteil mittels Bolzen und Schlitzverbindung angeordnet, welche der ersten anfänglichen Verlagerung des äußeren Schalenteils Widerstand leisten. Im Rahmen der dort offenbarten Ausführungsformen ist auch eine Nachgiebigkeit des äußeren Schalenkörpers gegenüber dem inneren Schalenkörper umfasst, welche durch Gasdämpfer, Reibungsdämpfer, Federn und/oder Gassäcke bewerkstellig werden soll.

Neben dem teilweise komplizierten und fertigungstechnisch aufwendigen Aufbau ist bei allen vorgenannten Ausführungsformen nachteilig, dass diese energie- bzw. stoßabsorbierende Körper auf Basis von Kunststoff meist aus aufgeschäumten Schaumkörpern vorgesehen. Bereits bei der Herstellung dieser Körper können umweltschädigende Stoffe entstehen bzw. frei werden. Insbesondere sind diese jedoch beim Recycling eines Kraftfahrzeuges nachteilig. Die eingesetzten Kunststoffe sind mitunter nur schwer einer Wiederverwertung zuzuführen. Zudem ist eine Trennung der metallischen Werkstoffe und des Kunststoffs für eine sachgerechte Wiederaufbereitung erforderlich.

Der Erfindung liegt daher ausgehend vom Stand der Technik die Aufgabe zugrunde, eine Stoßfängeranordnung zu schaffen, welche unter Vermeidung von Stoßabsorptionskörpern aus Kunststoff ein definiertes Nachgiebigkeitsverhalten besitzt und zu einem funktionell wirksamen Passantenschutzes beiträgt.

Die Lösung dieser Aufgabe besteht nach der Erfindung in einer Stoßfängeranordnung gemäß Anspruch 1.

Kernpunkt der Erfindung bildet die Maßnahme, dass der Querträger als Hohlprofil ausgebildet ist, wobei aus dessen der Verschalung zugewandten Frontfläche Federn herausgearbeitet sind.

Der Querträger besteht aus Metall, insbesondere aus Stahlblech oder Leichtmetall. Hervorzuheben ist sein definiertes Nachgiebigkeitsverhalten bei einem Crash. Auf niedrigem Kraftniveau und niedriger Geschwindigkeit geben die Federn elastisch nach und verzehren hierbei Aufprallenergie. Ist der Federweg aufgebraucht, nimmt der Querträger als Ganzes Energie auf und wandelt diese in Biege- und gegebenenfalls in Verformungsarbeit um.

Eine besonders vorteilhafte Ausführungsform des Kerngedankens besteht nach Anspruch 2 in einer Stoßfängeranordnung, bei der das Hohlprofil einen im Querschnitt U-förmigen Schalenkörper mit einem Steg und zwei Schenkeln umfasst, welcher frontseitig durch ein die Frontfläche bildendes Schließblech geschlossen ist. Diese Konstruktion ist leicht und besitzt ein hohes Widerstandsmoment.

In diesem Zusammenhang weisen die Schenkel des Schalenkörpers Flansche auf (Anspruch 3). Diese erstrecken sich vorzugsweise nach außen. An den Flanschen stützt sich das Schließblech ab und ist hier mit dem Schalenkörper gefügt.

Eine besonders vorteilhafte Ausgestaltung der Federn ist in Anspruch 4 charakterisiert. Danach sind die Federn durch aus der Frontfläche in Richtung zur Verschalung ausgestellte Federschenkel und Federbleche gebildet. Hierzu wird das Schließblech bereichsweise profiliert. Dies kann beispielsweise durch Stanzschneiden oder Laserschneiden erfolgen. Das Schließblech weist in diesen Bereichen dann ein Muster aus miteinander verbundenen Schenkeln und Blechabschnitten auf. Anschließend werden die Bereiche aus dem Schließblech herausgezogen bzw. herausgedrückt, so dass die Federn entstehen.

Nach den Merkmalen von Anspruch 5 ist unterhalb des Querträgers ein Querholm angeordnet. Durch diese Maßnahme kann das Anpralldämpfungsverhalten der erfindungsgemäßen Stoßfängeranordnung weiter gesteigert werden. Der Querholm unterhalb des Querträgers schafft eine zusätzliche Abfangfläche im bodennahen Bereich, die an der Energieumwandlung im Falle eines Anpralls teilnimmt. Positiv wirkt sich weiterhin aus, dass ein Hindernis flächiger getroffen wird und hierdurch die auftretenden Kräfte besser verteilt werden.

Zweckmäßigerweise stützt sich der Querholm über Distanzstreben und die Anschlagplatten an den Längsträgern des Kraftfahrzeugs ab, wie dies Anspruch 6 vorsieht.

Der Querschnitt des Querholms kann unterschiedlich gestaltet sein. Für die Praxis bietet sich der Einsatz von Rohr- bzw. Hohlprofilen oder U-Profilen an. Die Distanzstreben sind ebenfalls im Querschnitt bauteilgerecht und konstruktiv auf die jeweiligen Kraftfahrzeugtypen abgestimmt. Auch für die Distanzstreben können Hohlprofile ebenso wie U-Profile eingesetzt werden. Zweckmäßigerweise sind die Distanzstreben so gestaltet, dass sie ebenfalls an einer Energieumwandlung und Stoßdämpfung teilnehmen.

Die Erfindung ist nachfolgend anhand von in den Zeichnungen dargestellten Ausführungsbeispielen näher beschrieben. Es zeigen:
- Figur 1: eine Stoßfängeranordnung in explosionsartig auseinandergezogener Darstellungsweise;
- Figur 2: die Stoßfängeranordnung in der Perspektive;
- Figur 3: einen Ausschnitt aus der Stoßfängeranordnung gemäß Figur 2;
- Figur 4: in der Ansicht einen Ausschnitt aus einem Schließblech mit der Darstellung eines Schnittbildes;
- Figur 5: ebenfalls in der Perspektive einen Ausschnitt aus einer zweiten Ausführungsform eines Stoßfängers und
- Figur 6: eine weitere Alternative eines Federelements.

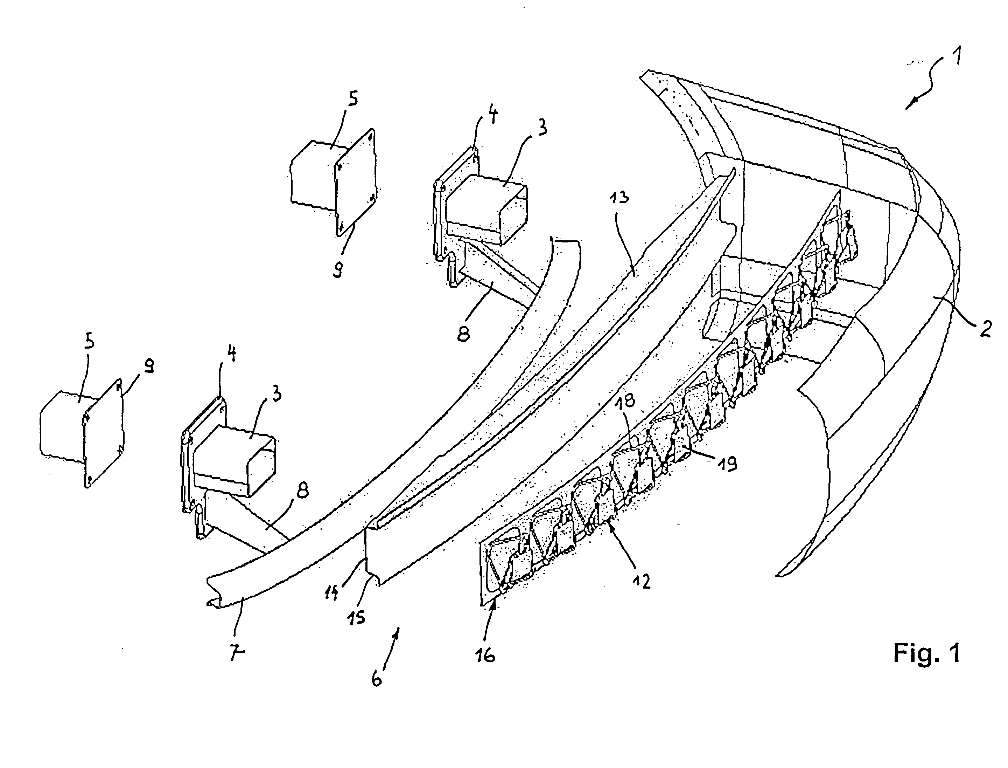

Die Figur 1 zeigt in der Perspektive die wesentlichen Bauteile einer Stoßfängeranordnung 1 für den durch eine Verschalung 2 aus Kunststoff verkleideten Frontbereich der ansonsten nicht näher dargestellten Karosserie eines Personenkraftwagens.

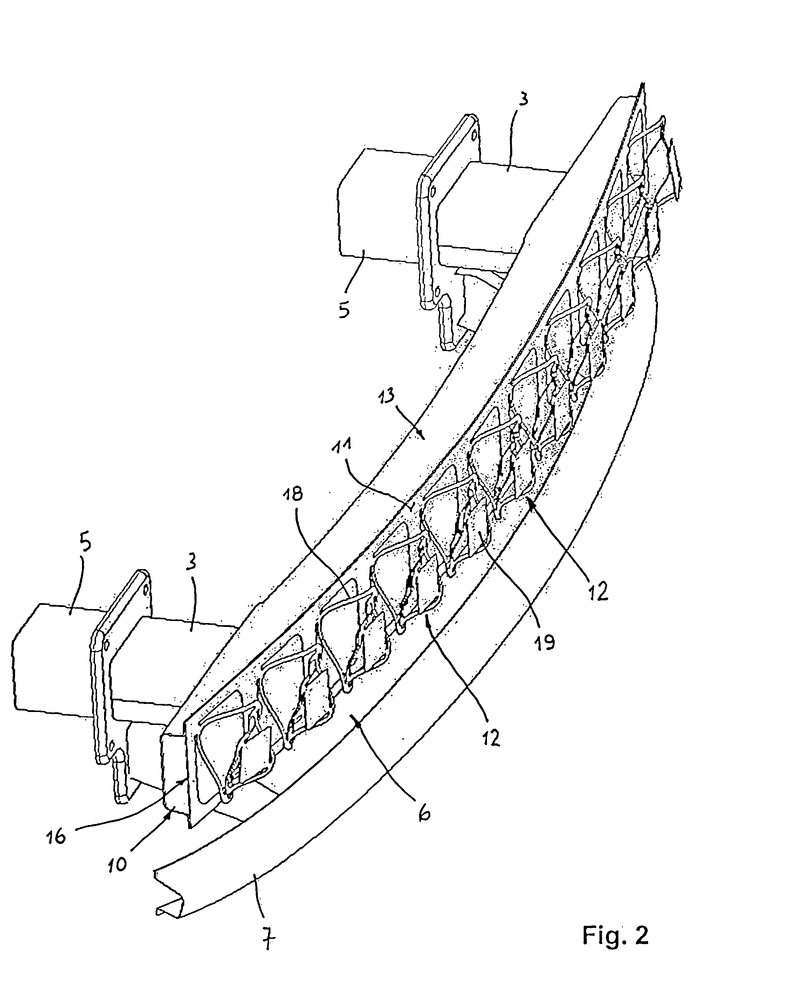

Figur 2 zeigt die Stoßfängeranordnung 1 in zusammengebautem Zustand.

Die Stoßfängeranordnung 1 umfasst einen endseitig über aus rechteckigen Hohlprofilen bestehenden Distanzkonsolen 3 und Anschlagplatten 4 mit den Längsträgern 5 des Kraftfahrzeugrahmens verbundenen Querträger 6. Unterhalb des Querträgers 6 ist ein Querholm 7 vorgesehen. Der im Querschnitt als U-Profil gestaltete Querholm 7 ist über schräg verlaufende Distanzstreben 8 mit den Anschlagplatten 4 verbunden.

Die Distanzkonsolen 3 sind einerseits mit dem Querträger 6 und andererseits mit den Anschlagplatten 4 verschweißt. Die Anschlagplatten 4 sind mit Flanschplatten 9 lösbar verbunden, welche stirnseitig jedes Längsträgers 5 vorgesehen sind.

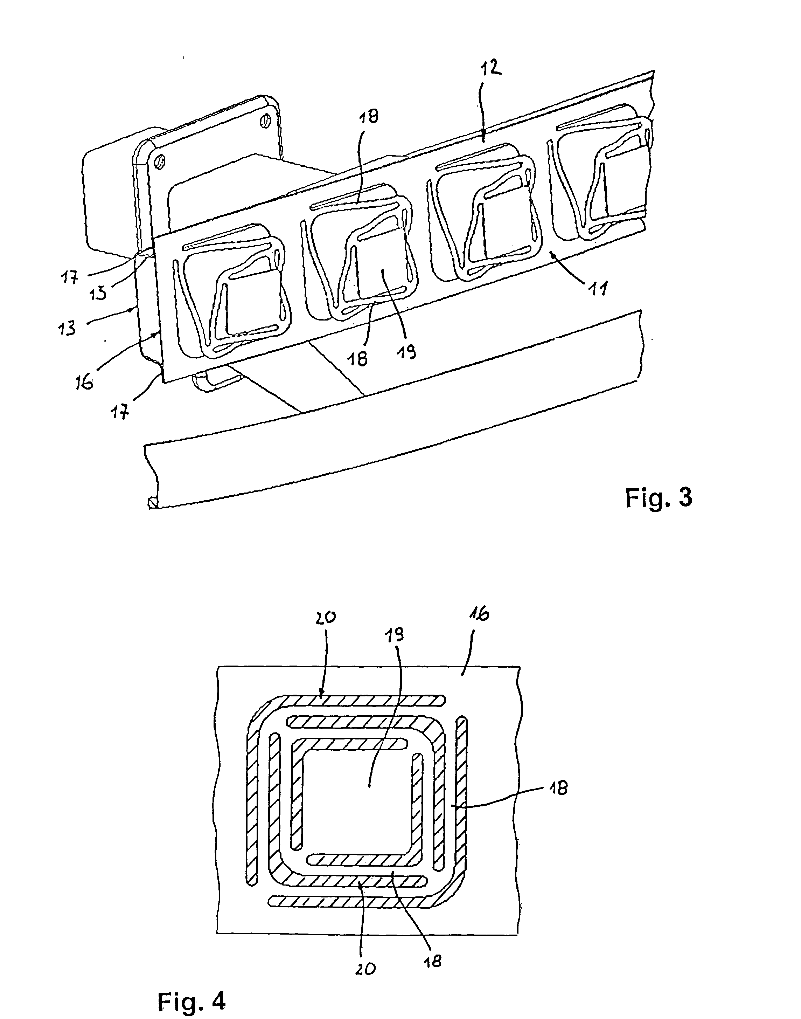

Der Querträger 6 ist als Hohlprofil 10 ausgebildet. Aus dessen der Verschalung 2 zugewandten Frontfläche 11 sind Feder 12 herausgearbeitet. Dies verdeutlicht auch Figur 3.

Das Hohlprofil 10 besteht aus einem im Querschnitt U-förmigen Schalenkörper 13 mit einem Steg 14 und zwei Schenkeln 15, welcher frontseitig durch ein die Frontfläche 11 bildendes Schließblech 16 geschlossen ist. Die Schenkel 15 des Schalenkörpers 13 sind zur Verschalung 2 hin gerichtet. Über den Steg 14 ist der Schalenkörper 13 an den Distanzkonsolen 3 festgelegt.

An die Schenkel 15 des Schalenkörpers 13 schließen sich nach außen gerichtete obere und untere Flansche 17 an. An den Flanschen 17 stützt sich das Schließblech 16 ab und ist hier in bauteilgerechter Weise beispielsweise mittels Punktverschweißung oder Klebung festgelegt. Möglich ist auch eine falztechnische Fügung zwischen Schließblech 16 und Schalenkörper 13.

Die Federn 12 sind durch aus der Frontfläche 11 in Richtung zur Verschalung 2 ausgestellte Federschenkel 18 und Federbleche 19 gebildet.

Hierzu ist das anfangs ebene Schließblech 16 in den Bereichen der Federn 12 zunächst in einer geeigneten Schnittführung profiliert worden. Ein solches Schnittbild zeigt die Figur 4. Die hier schraffiert dargestellten Flächen sind aus dem Schließblech 16 herausgetrennt. Es entsteht ein Muster aus zueinander versetzt angeordneten bummerangartig gestalteten Schlitzöffnungen 20. Das zentrale Federblech 19 wird anschließend zusammen mit den Federschenkeln 18 aus der Ebene herausgezogen bzw. herausgedrückt. Die Federschenkel 18 sind dann leicht S-förmig gekrümmt.

Die Federbleche 19 stützen sich gegen die Verschalung 2 ab. Bei einem Anprall geben die Federn 12 begrenzt nach, wodurch ein Großteil der Anprallenergie abgebaut werden kann. Bei einem Zusammenstoß mit einem Fußgänger können hierdurch die Belastungen der unteren Extremitäten wirksam reduziert werden.

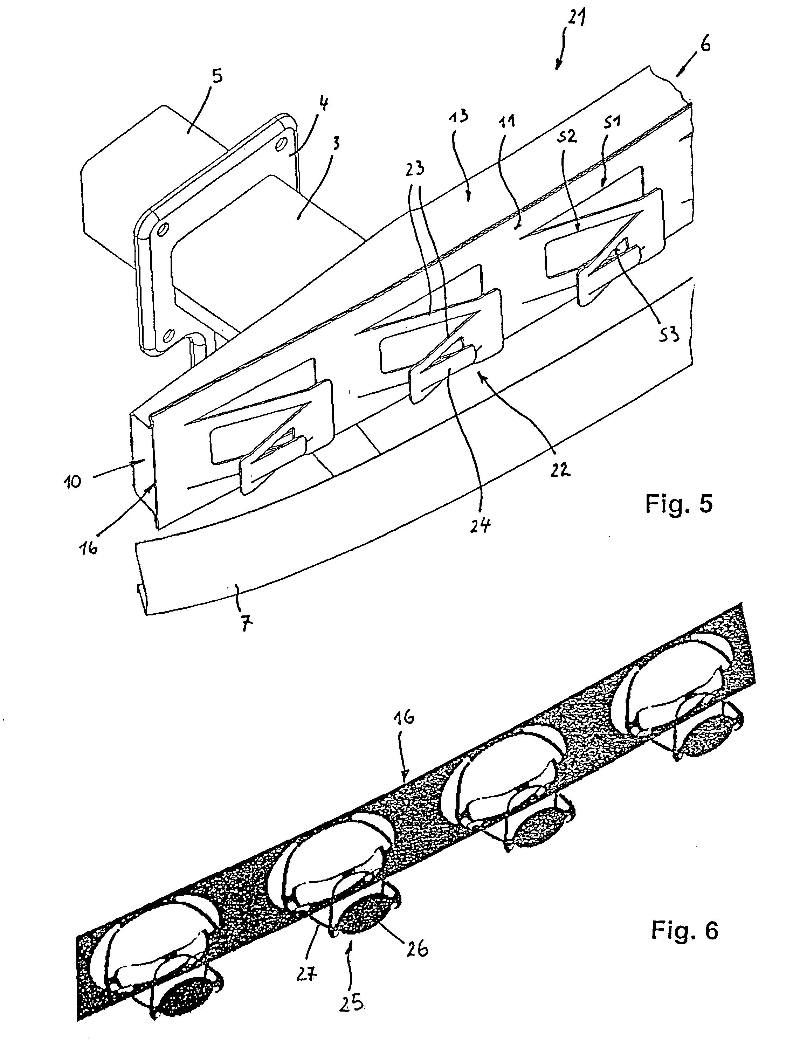

Die Figur 5 zeigt eine Stoßfängeranordnung 21, welche von der Grundkonzeption der zuvor beschriebenen Stoßfängeranordnung 1 entspricht. Von daher tragen einander entsprechende Bauteile die gleichen Bezugszeichen. Der Schalenkörper 13 des Querträgers 6 ist frontseitig durch ein Schließblech 16 geschlossen, aus dem Federn 22 aus Federschenkeln 23 und Federblechen 24 einstückig herausgearbeitet sind.

Zur Herstellung einer Feder 22 ist das Schließblech 16 durch drei U-förmige Schnitte S1, S2, S3 profiliert worden. Man erkennt, dass die Schnitte S1, S2, S3 ineinander geschachtelt und jeweils versetzt zueinander angeordnet sind. Anschließend werden die Federschenkel 23 und die Federbleche 24 aus der Ebene des Schließblechs 16 nach vorne ausgestellt.

Eine weitere Alternative einer Feder 25 geht aus der Figur 6 hervor. Die Feder 25 weist ein rundes vorderes Federblech 26 auf, welches sich über gebogene Federschenkel 27 am Schließblech 16 abstützt. Die Federn 25 sind einstückig aus dem Material des Schließblechs 16 herausgearbeitet.

### Bezugszeichenaufstellung

- 1 -: Stoßfängeranordnung
- 2 -: Verschalung
- 3 -: Distanzkonsole
- 4 -: Anschlagplatte
- 5 -: Längsträger
- 6 -: Querträger
- 7 -: Querholm
- 8 -: Distanzstrebe
- 9 -: Flanschplatte
- 10 -: Hohlprofil
- 11 -: Frontfläche
- 12 -: Feder
- 13 -: Schalenkörper
- 14 -: Steg
- 15 -: Schenkel
- 16 -: Schließblech
- 17 -: Flansch
- 18 -: Federschenkel
- 19 -: Federbleche
- 20 -: Schlitzöffnung
- 21 -: Stoßfängeranordnung
- 22 -: Feder
- 23 -: Federschenkel
- 24 -: Federblech
- 25 -: Feder
- 26 -: Federblech
- 27 -: Federschenkel

- S1 -: Schnitt
- S2 -: Schnitt
- S3 -: Schnitt

## Patentansprüche

1. Stoßfängeranordnung für den durch eine Verschalung (2) verkleideten Frontoder Heckbereich eines Kraftfahrzeugs, welche einen endseitig über Distanzkonsolen (3) und Anschlagplatten (4) mit den Längsträgern (5) des Kraftfahrzeugrahmens verbundenen Querträger (6) aufweist, der Querträger (6) ist als Hohlprofil (10) ausgebildet **dadurch gekennzeichnet, dass** aus dessen der Verschalung (2) zugewandten Frontfläche (11) Federn (12, 22, 25) durch Profilierung der Frontfläche (11) Mittels Schneiden, über die Frontfläche herausgearbeitet sind.

2. Stoßfängeranordnung nach Anspruch 1, **dadurch gekennzeichnet, dass** das Hohlprofil (10) einen im Querschnitt U-förmigen Schalenkörper (13) mit einem Steg (14) und zwei Schenkeln (15) umfasst, welcher frontseitig durch ein die Frontfläche (11) bildendes Schließblech (16) geschlossen ist.

3. Stoßfängeranordnung nach Anspruch 2, **dadurch gekennzeichnet, dass** sich endseitig an die Schenkel (15) Flansche (17) anschließen.

4. Stoßfängeranordnung nach einem der Ansprüche 1 bis 3, **dadurch gekennzeichnet, dass** die Federelemente (12, 22, 25) durch aus der Frontfläche (10) in Richtung zur Verschalung (2) ausgestellte Federschenkel (18, 23, 27) und Federbleche (19, 24, 26) gebildet sind.

5. Stoßfängeranordnung nach einem der Ansprüche 1 bis 4, **dadurch gekennzeichnet, dass** unterhalb des Querträgers (6) ein Querholm (7) angeordnet ist.

6. Stoßfängeranordnung nach Anspruch 5, **dadurch gekennzeichnet, dass** sich der Querholm (7) über Distanzstreben (8) und den Anschlagplatten (4) an den Längsträgern (5) abstützt.

## Claims

1. A bumper arrangement for the front or rear zone of a motor vehicle covered by a panelling (2), comprising a cross-member (6) connected at the ends to the longitudinal members (5) of the motor vehicle frame via spacer brackets (3) and abutment plates (4), the cross-member (6) being constructed as a hollow profile (10), **characterised in that** springs (12, 22, 25) are formed, out of the front surface (11) thereof facing the panelling (2), over the front surface (11) by profiling thereof by cutting.

2. A bumper arrangement according to claim 1, **characterised in that** the hollow profile (10) comprises a shell member (13) of U-shaped cross-section comprising a web (14) and two limbs (15), which is closed at the front by a closure plate (16) forming the front surface (11).

3. A bumper arrangement according to claim 2, **characterised in that** flanges (17) adjoin the limbs (15) at the ends.

4. A bumper arrangement according to any one of claims 1 to 3, **characterised in that** the spring elements (12, 22, 25) are formed by spring plates (19, 24, 26) and spring limbs (18, 23, 27) extending out of the front surface (10) in the direction of the panelling (2).

5. A bumper arrangement according to any one of claims 1 to 4, **characterised in that** a transverse spar (7) is disposed beneath the cross-member (6).

6. A bumper arrangement according to claim 5, **characterised in that** the transverse spar (7) bears against the longitudinal members (5) via spacer struts (8) and the abutment plates (4).

## Revendications

1. Arrangement de pare-chocs pour l'habillage avant ou arrière d'un véhicule par une coque (2), qui comprend une traverse (6) solidarisée aux extrémités avec les longerons (5) du châssis du véhicule par l'intermédiaire de consoles d'entretoisement (3) et de plaques de butée (4) , la traverse (6) étant réalisée sous forme d'un profilé creux (10), **caractérisé en ce que**, à partir de sa face frontale (11) tournée vers la coque (2), des ressorts (12, 22, 25) sont façonnés à travers le profilage de la surface frontale (11) au moyen de découpes sur la surface frontale (11).

2. Arrangement de pare-chocs selon la revendication 1, **caractérisé en ce que** le profil creux (10) comprend un corps de coque (13) à section transversale en U avec une âme (14) et deux côtés latéraux (15), qui est fermé frontalement par une platine (16) formant la face frontale (11).

3. Arrangement de pare-chocs selon la revendication 2, **caractérisé en ce que** les flasques (17) se raccordent à leurs extrémités aux côtés latéraux (15).

4. Dispositif de pare-chocs selon l'une des revendications 1 à 3, **caractérisé en ce que** les ressorts (12, 22, 25) sont formés de branches de ressort (18, 23, 27) et de tôles de ressort (19, 24, 26) projetés hors de la surface frontale (10) en direction de la coque (2).

5. Dispositif de pare-chocs selon l'une des revendications 1 à 4, **caractérisé en ce qu'**un longeron transversal (7) est disposé au-dessous de la traverse (6).

6. Arrangement de pare-chocs selon la revendication 5, **caractérisé en ce que** le longeron transversal (7) s'appuie sur les longerons (5) par l'intermédiaire d'entretoises (8) et des plaques de butée (4).
